# EUROPEAN PATENT APPLICATION

(11) **EP 3 838 682 A1**
(43) Date of publication of application: **23.06.2021**
(21) Application number: 19217167.6
(22) Date of filing: 17.12.2019
(51) Int. Cl.: B60R 13/08

(54) **SOUND ABSORPTION PANEL ASSEMBLY**

(71) Applicant: Illinois Tool Works, Inc., Glenview, Illinois 60025 (US)
(72) Inventor: Merlo, Luigi, 11020 Hone (IT); Klinkosz, Tomasz, 80-180 Kowale (PL)
(74) Representative: HGF

(57) **Abstract**

The present invention relates to a sound absorption panel assembly for mounting on a vehicle external surface. The sound absorption panel assembly comprises a substantially planar panel body (10) having a proximal surface (12), and a distal surface (14) opposite the proximal surface (12). The sound absorption panel assembly (10) also comprises a fixation member (40) having a proximal end (42) and a distal end (44), comprising a first engagement portion (46) towards the proximal end (42) adapted to cooperate with a second engagement portion (48) towards the distal end (44) so as to retainingly engage at least a portion of the panel body (10). The fixation member (40) further comprises at least one attachment element (50) protruding from the second engagement portion towards the distal end (44). The second engagement portion (48) is configured to provide a determined separation between the panel body (10) and the vehicle external surface, during use.

## Description

The present invention relates to a sound absorption panel assembly, in particular, but not exclusively, to a sound absorption panel assembly for mounting on a vehicle external surface, for example.

### Background

Typically, panels are fastened onto the vehicle using fastening clips, plastic rivets, panel retainers, or similar fasteners. Vehicles are subject to vibration and road noise when driven on rough roads. These vibrations typically transfer through the exterior of the car into the interior when the vehicle is running.

Although fasteners of this type are suitable for mounting panels to the vehicle, they are not suitable for reducing noise and vehicle vibrations. Particularly, fastening panels onto the vehicle using the beforementioned fasteners causes the panel to directly contact the vehicle. This causes vibrations and sound energy to emanate from the vehicle. In some circumstances, vibrations and sound energy transfer from the body of the vehicle, and enter also into the interior of the vehicle.

It would be desirable to provide a panel assembly that can alleviate or mitigate one or more of the aforementioned problems. Particularly, it is an object of the invention to provide a panel assembly which absorbs sound energy. It is another object of the invention that provide a panel assembly that is quick and easy to attach to a surface.

The present invention provides at least an alternative to panel assemblies of the prior art.

### Summary of the Invention

In accordance with the present invention there is provided a sound absorption panel assembly according to the appended claims.

According to an aspect of the present invention, there is provided a sound absorption panel assembly for mounting on a vehicle external surface, comprising: a substantially planar panel body having a proximal surface, and a distal surface opposite the proximal surface; and a fixation member having a proximal end and a distal end, comprising a first engagement portion towards the proximal end adapted to cooperate with a second engagement portion towards the distal end so as to retainingly engage at least a portion of the panel body, the fixation member further comprising at least one attachment element protruding from the second engagement portion towards the distal end, the second engagement portion configured to provide a predetermined separation between the panel body and the vehicle external surface, during use.

Thus, there is provided a separation between the lower surface of the panel body and the surface on which the panel is mounted. The separation provides an air chamber (i.e. an air gap) which increases sound absorption and noise absorption. The second engagement portion acts as a spacer to maintain distance between the noise absorbing panel and the surface of the vehicle. The fixation member holds the panel in place and at a predetermined separation distance away from the external surface of the vehicle. The air chamber absorbs noise and vibrations which reduces vehicle vibration and noise. The sound absorption panel assembly provides a panel body integrating a fastener with the engagement portions such that the panel body can be affixed to the vehicle external surface. There is provided with a low cost and lightweight assembly in an efficient and reliable manner, that is customisable depending on the position of the panel body and amount of silencing required.

Advantageously in some embodiments, the fixation member further comprises a threaded portion towards the proximal end.

Advantageously in some embodiments, the first engagement portion comprises a first thread. Advantageously in some preferred embodiments, the first thread is configured to engageably couple the threaded portion. This is particularly beneficial because the first engagement portion can move along the axis of the threaded portion. This allows the position of the first engagement portion to be moved. By moving the position of the first engagement portion, the distance between the first engagement portion and the second engagement portion of the fixation member can be changed. This enables panels of different shapes and sizes to be retained by the fixation member. Additionally, the retention force applied by the fixation member onto the panel body can be changed depending on the application and the extent of sealing required.

Advantageously in some embodiments, the second engagement portion comprises a second thread. Advantageously in some specific embodiments, the second thread is configured to engageably couple the threaded portion. In some embodiments, the first engagement portion and the second engagement portion are configured to engageably couple different threaded portions of the fixation member. For example, the first engagement portion may be configured to engageably couple a first threaded portion towards the proximal end. The second engagement portion may be configured to engageably couple a second threaded portion towards the distal end. By having the second engagement portion engageably coupled to a threaded portion, the position of the second engagement portion can be moved. By moving the position of the second engagement portion, the distance between the first engagement portion and the second engagement portion of the fixation member can be changed. This enables panels of different shapes and sizes to be retained by the fixation member. Additionally, the retention force applied by the fixation member onto the panel body can be changed depending on the application and the extent of sealing required. Moreover, by having the second engagement portion engageably coupled to a threaded portion, the distance between the panel body and the vehicle external surface can be changed. This provides the opportunity to set a desired distance of the panel body from the holding structure.

Advantageously in some preferred embodiments, the fixation member further comprises a coupling member configured to holdingly engage the first engagement portion and the second engagement portion. The provision of a coupling member configure to holdingly engage the first engagement portion and the second engagement portion allows a maximum separation distance between the first engagement portion and the second engagement portion to be set. That is to say, the coupling member allows the first engagement portion and the second engagement portion to be separated by a maximum predetermined distance. Moreover, the first engagement portion and the second engagement portion are held together by the coupling member.

Advantageously in some specific embodiments, the coupling member is integrally formed with at least one of the first engagement portion and the second engagement portion. In some embodiments, for example, the coupling member is integrally formed with the first engagement portion. In some embodiments, the coupling member is integrally formed with the second engagement portion. In some specific embodiments, the coupling member is integrally formed with both the first engagement portion and the second engagement portion.

Advantageously in some embodiments, the coupling member is configured to engage the peripheral edge of the panel body, during use.

Advantageously in some embodiments, the first engagement portion is adapted to cooperate with the second engagement portion so as to retainingly engage the peripheral edge of the panel body. This is advantageous because the panel body is supported at the peripheral edge. This increases the rigidity of the sound absorption panel assembly, which improves the durability of the assembly.

Advantageously in some embodiments, the first engagement portion is continuous about the peripheral edge of the panel body.

Advantageously in some embodiments, the second engagement portion is continuous about the peripheral edge of the panel body. By having the first engagement portion and/or the second engagement portion being continuous about the peripheral edge of the panel body, the panel body is supported around its entirety, which increases the strength and rigidity of the sound absorption panel assembly. This improves the durability of the assembly.

Advantageously in some embodiments, at least one attachment element comprises a clip portion configured to retainingly engage the vehicle external surface, during use. Providing at least one attachment element having a clip portion is advantageous because they are inserted into a predetermined depth into the vehicle external surface. This improves the ease of attaching the assembly the vehicle, and improves the ease of aligning the panel to the vehicle external surface. Moreover, when the clip portion is engaged with the vehicle external surface, there is provided an audible or visual indication that the assembly is attached to the vehicle external surface.

Advantageously in some specific embodiments, at least one attachment is integrally formed with the second engagement portion.

Advantageously in some specific embodiments, the sound absorption panel further comprises a frame member having an engagement portion adapted to sealing abut the first engagement portion. By providing a frame member having an engagement portion adapted to sealingly engage the first engagement portion, the sealing and sound absorption capabilities of the panel assembly is further improved. Moreover, the frame member provides mechanical protection around the panel body. The edges of the panel body are protected by the frame member.

Advantageously in some embodiments, the first engagement portion and the second engagement portion form a C-shaped cross section. In some embodiments, the first engagement portion and the second engagement portion form a H-shaped cross section. By having the first engagement portion and the second engagement portion form a C-shaped cross section or a H-shaped cross section, the recessed portion between the first engagement portion and the second engagement portion retains the panel in place, further improving the strength and structural rigidity of the structure. That is to say, the area of engagement between the engagement portions and the panel is further increased.

According to another aspect of the invention there is provided a fixation member for use in a sound absorption panel assembly.

### Brief Description of the Drawings

Embodiments of the invention are now described, by way of example only, hereinafter with reference to the accompanying drawings, in which:
**Figure 1** illustrates perspective view of an example embodiment of a panel body;
**Figure 2** illustrates a perspective view of an example embodiment of a fixation member;
**Figure 3** illustrates a perspective bottom view of an example embodiment of a sound absorption panel assembly;
**Figure 4** illustrates a perspective top view of the sound absorption panel assembly of Figure 3;
**Figure 5** illustrates a detailed side section view of the sound absorption panel assembly of Figure 3;
**Figure 6** illustrates a detailed side section view of another example embodiment of a sound absorption panel assembly;
**Figure 7** illustrates a perspective bottom view of an example embodiment of a fixation member;
**Figure 8** illustrates a perspective top view of the fixation member in Figure 7;
**Figure 9** illustrates a perspective view of an example embodiment of a panel body;
**Figure 10** illustrates a perspective view of an example embodiment of a fixation member;
**Figure 11** illustrates a perspective view of an example embodiment of a sound absorption panel assembly;
**Figure 12** illustrates a perspective view of an example embodiment of a frame member;
**Figure 13** illustrates a side section view of an example embodiment of a sound absorption panel assembly;
**Figure 14** illustrates a bottom perspective view of the sound absorption panel assembly of Figure 13;
**Figure 15** illustrates a top perspective view of the sound absorption panel assembly of Figure 13;
**Figure 16** illustrates a perspective view of a further example embodiment of a fixation member, and
**Figure 17** illustrates a bottom perspective view of a further example embodiment of a sound absorption panel assembly.

### Detailed Description

The described example embodiment relates to a sound absorption panel assembly and particularly for mounting on a vehicle external surface. The invention is, however, not limited to a sound absorption panel for mounting on a vehicle external surface. For example, the sound absorption panel may be for mounting on a vehicle interior surface. The invention is not limited to a sound absorption panel for a vehicle.

As used herein, the term "distal" is used to describe the side that is away from the user when the sound absorption panel is to be mounted. For example, the distal side of the fixation member is the side with the at least one attachment element that is facing away from the user, and towards the surface to be mounted upon.

As used herein, the term "end" is used to describe a location that is towards a boundary of an end. The term "end" may refer to a positional extreme. In some examples, "end" refers to one position relative to another. By way of example,

As used herein, the term "planar" is used to describe an element having a length that is substantially greater than its thickness. Generally, the planar element has two sides or faces,

As used herein, the term "proximal" is used to describe the side that is closer to the user when the sound absorption panel is to be mounted. For example, the proximal side of the fixation member is the side that is facing the user when the sound absorption panel assembly is being mounted.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

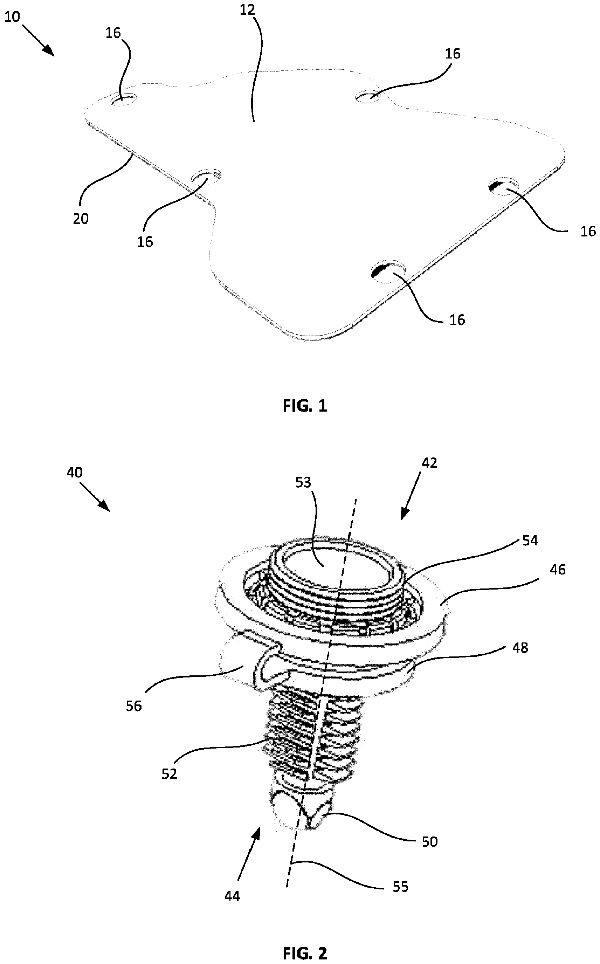

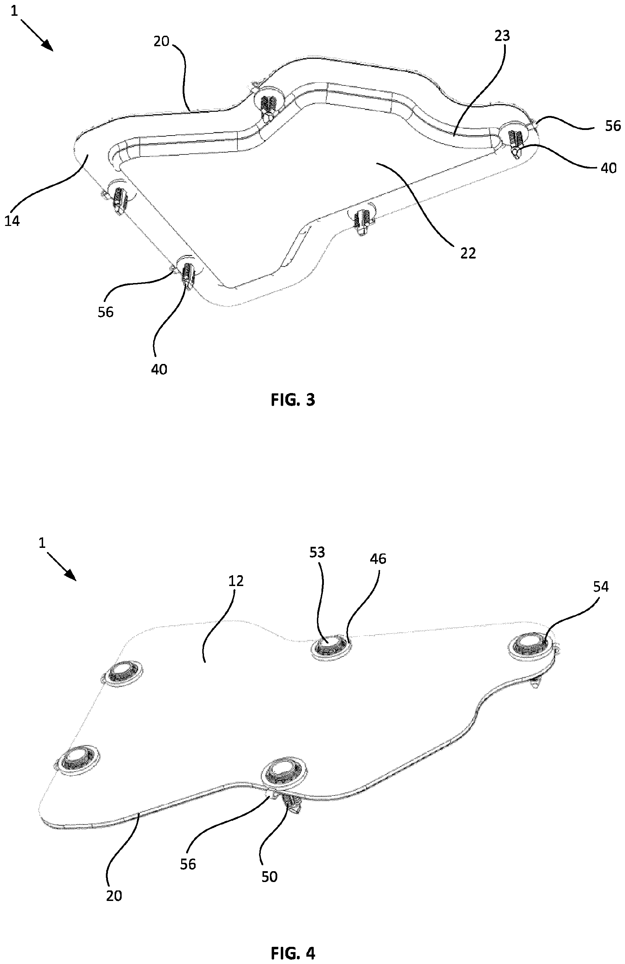

Figure 1 shows a panel body 10. The panel body 10 has a proximal surface 12. The panel body 10 also has a distal surface (14 see Figure 3) on a side opposite to the proximal surface 12. The panel body 10 is planar, having a length that is substantially greater than its thickness. The panel body 10 may have any arbitrary shape corresponding to the vehicle surface (not shown) on which the panel body 10 is mounted. The panel body 10 is provided with a number of openings 16 extending through the thickness of the panel body 10. More specifically in this example, the panel body 10 is provided with five openings 16 provided and towards a peripheral edge 20 of the panel body 10. The openings 16 are arranged inward of the peripheral edge 20 of the panel body 10 such that a portion of panel body 10 exists between the peripheral edge 20 and the openings 16.

Figure 2 shows a fixation member 40 having a proximal end 42 and a distal end 44. A first engagement portion 46 in the form of a first flange is arranged towards the proximal end 42. A second engagement portion 48 in the form of a second flange is arranged towards the distal end 44. That is, the second engagement portion 48 is arranged between the first engagement portion 46 and the distal end 44 of the fixation member 40. The fixation member 40 is provided with an attachment element 50 having a retention portion made up of gripping members 52 extending radially outward. In some examples, the attachment element 50 is integrally formed with the second engagement portion 48. The fixation member 40 has a head portion 53 arranged at the proximal end 42. The head portion 53 has a threaded portion 54. In this particular example, the first engagement portion 46 has an internal thread on the radially inward surface. The internal thread of the first engagement portion 46 engages the threaded portion 54. Rotation of the first engagement portion 46 about the longitudinal axis 55 of the fixation member 40 translates the first engagement portion 46 along the direction of the longitudinal axis 55. This changes the distance between the first engagement portion 46 and the second engagement portion 48. The fixation member 40 may be molded in one piece.

In some examples, the second engagement portion 48 also has an internal thread arranged on its radially inward surface. In some arrangements, the second engagement portion 48 is also arranged on the threaded portion 54. As such, rotation of the second engagement portion 48 about the longitudinal axis 55 of the fixation member 40 translates the second engagement portion 48 along the direction of the longitudinal axis. The second engagement portion 48 may be arranged on a threaded portion that is separate from threaded portion 54.

A coupling member 56 is arranged to couple the first engagement portion 46 and the second engagement portion 48. In this specific example, the coupling member is made from a rigid plastic material. The coupling member holds the first engagement portion 46 relative to the second engagement portion 48, such that the distance between the first engagement portion 46 and the second engagement portion 48 does not exceed a predetermined distance. In some examples, the coupling member 56 is integrally formed with the first engagement portion 46. In other examples, the coupling member 56 is integrally formed with the second engagement portion 48. In yet other examples, the coupling member 56 is integrally formed with both the first engagement portion 46 and the second engagement portion 48.

Figures 3 to 5 illustrate a panel assembly 1. The panel assembly 1 includes the panel body 10 and a plurality of fixation members 40. In this example, five fixation members 40 are arranged in the openings 16 of the panel body 10. The second engagement portion 48 may have a smaller diameter than the first engagement portion 46. The second engagement portion 48 can therefore be pushed through the opening 16, and the first engagement portion 46 holds the fixation member 40 in place. In some examples, a different number of fixation members 40 are arranged in the panel body 10. In still other examples, the fixation members 40 may be arranged in different locations in the panel body 10. Referring to Figure 3, the panel body 10 has a distal surface 14. The areas of the panel body 10 closer to the peripheral edge 20 have a reduced thickness compared to the rest of the panel body 10. That is, the central portion 22 of the panel body 10 on the distal side has an increased thickness. The central portion 22 has a reinforced structure. Still referring to Figure 3, the coupling members 56 of the fixation members 40 are arranged towards the peripheral edge 20 of the panel body 10. The coupling members 56 are arranged to hook around the peripheral edge 20 of the panel body 10. This locates the fixation members 40 in place.

As best seen in Figure 4, the bottom (i.e. distal) surface of the first engagement portion 46 engages with the proximal surface 12 of the panel body 10. Though not shown, in a similar manner the upper (i.e. proximal) surface of the second engagement portion 48 engages with the distal surface 14 of the panel body 10. The first engagement portion 46 and the second engagement portion 48 cooperate with one another to retain the panel body 10 in place. In examples where an internal thread is arranged on the first engagement portion 46, the first engagement portion 46 can be rotated about the longitudinal axis of the fixation member 40 to engage the first engagement portion 46 internal thread to the threaded portion 54. This moves the first engagement portion 46 relative to the second engagement portion 48 in order to adjust the retention force of the engagement portions 46,48 on the panel body 10. It should be appreciated that in examples where the second engagement portion 48 is alternatively or additionally provided with an internal thread, the second engagement portion 48 internal thread can engage with the threaded portion 54. This moves the second engagement portion 48 relative to the first engagement portion 46 to adjust the retention force of the engagement portions 46,48 on the panel body. The movement of the first engagement portion 46 and/or the second engagement portion 48 along the longitudinal axis of the fixation member 40 can accommodate a panel body 10 of a different shape or thickness.

In use, the panel assembly 1 is mounted either manually by the user or via machinery. The attachment elements 50 are aligned with corresponding portions of an external surface of a vehicle (not shown). The panel body 10 is affixed to the vehicle external surface by inserting the attachment element 50 into the vehicle surface. The attachment element 50 extends through the surface and is embedded into the surface of the vehicle and held in place by retention members 52. The retention members 52 may deform radially inwards when the attachment element 50 is inserted into the vehicle surface. When the attachment element 50 is fully inserted into the surface, the retention members 52 may deform radially outward to hold the attachment element 50 in place. When installed, the bottom (i.e. distal) surface of the second engagement portion 48 engages the vehicle external surface. The second engagement portion 48 provides a predetermined distance of separation between the panel body 10 and the vehicle external surface. In embodiments where the second engagement portion 48 has an internal thread that engages with a threaded portion 54, the distance between the second engagement portion 48 and the vehicle external surface can be changed.

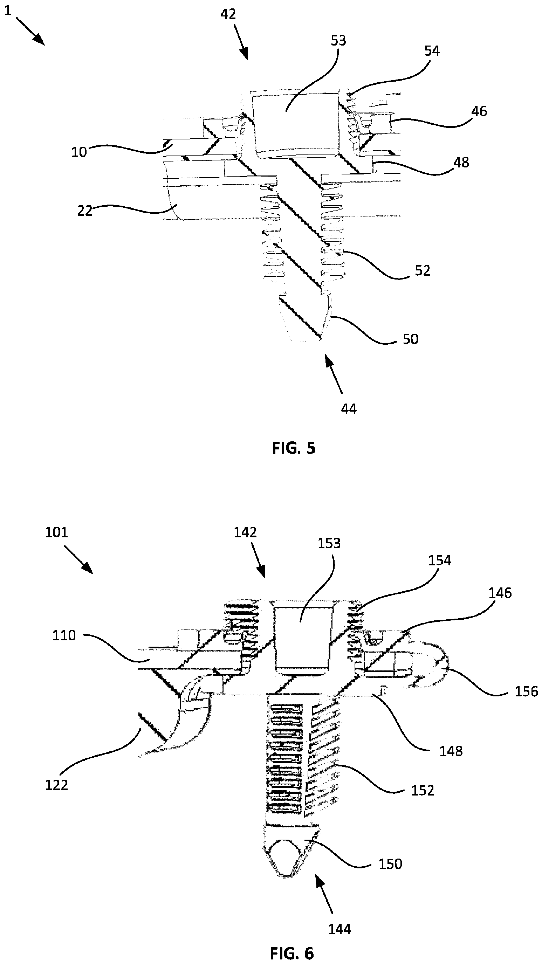

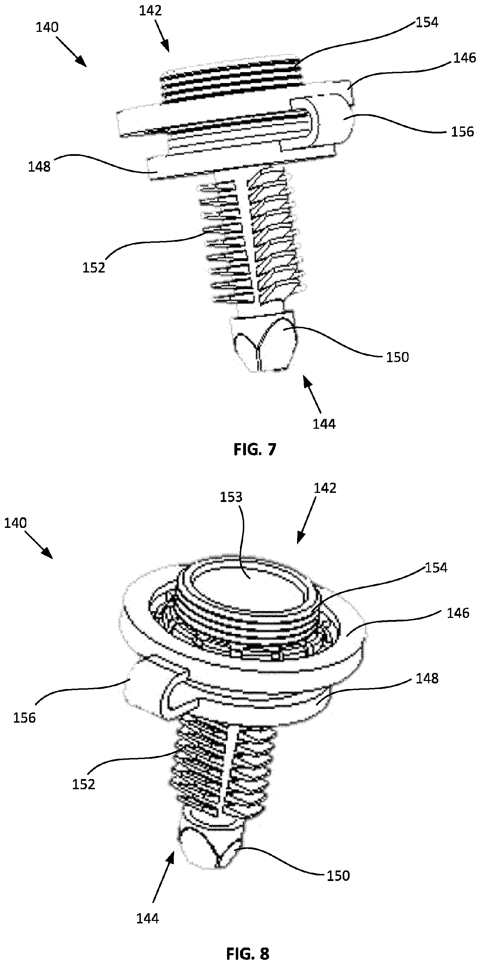

Referring now to Figure 6, there is provided a panel assembly 101. The panel assembly 101, panel body 110 and a fixation member 140 are as described above. However, retention members 152 of the attachment element 150 extend radially outward and back towards the proximal end 142 of the fixation member 140, forming an angle of about 85 degrees with the longitudinal axis of the fixation member 140 (see Figures 7 and 8) extending between the proximal end 142 and the distal end 144. In other examples, the retention members 152 may form a different angle. The angling of the retention members 152 increases the force required to remove the fixation member 140 from the vehicle external surface.

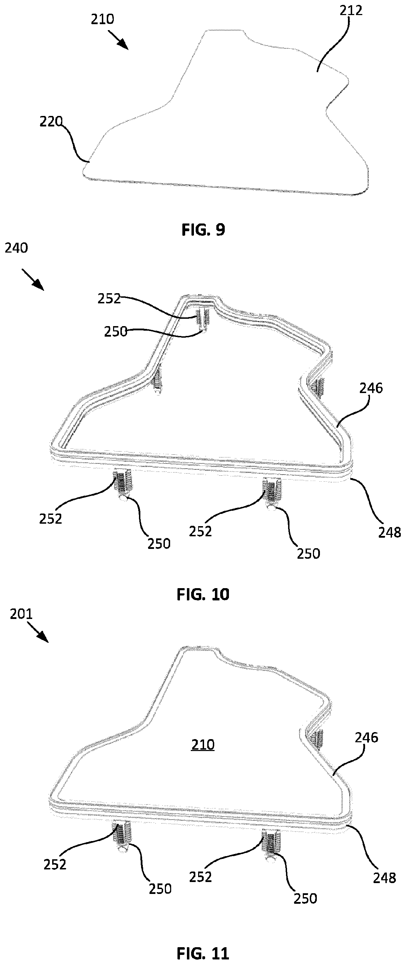

Figure 9 shows another embodiment of the present invention comprising a panel body 210. The panel body 210 has a proximal surface 212 and a distal surface (not shown) on a side opposite to the proximal surface 212. The panel body 210 is planar, having a length that is substantially greater than its thickness. The panel body 210 may have any arbitrary shape corresponding to the vehicle surface (not shown) on which the panel body 210 is mounted. The panel body 210 is defined by a peripheral edge 220.

Figure 10 shows a fixation member 240 having an upper (i.e. proximal) engagement frame 246 and a lower (i.e. distal) engagement frame 248. In some examples, the upper engagement frame 246 and the lower engagement frame 248 each integrally formed with an intermediate frame member disposed between the upper engagement frame 246 and the lower engagement frame 248. The upper engagement frame 246 and the lower engagement frame 248 may form a C-shaped cross section, or a H-shaped cross section. The fixation member 240 is provided with a plurality of attachment elements 250 having a retention portion made up of gripping members 252 extending radially outward. In this particular example, five attachment elements 250 are spaced apart and protruding from a lower (i.e. distal) surface of the lower engagement frame 248. In some examples, a different number of attachment members 250 may be arranged in the fixation member 240. In still other examples, the attachment elements 250 may be arranged in different locations fixation member 240. The fixation member 240 may be molded in one piece. The attachment elements 250 may be integrally formed with the lower engagement frame 248.

Figure 11 shows a panel assembly 201. The panel assembly 201 includes the panel body 210 and the fixation member 240. The panel body 210 is arranged in the fixation member 240 such that the lower (i.e. distal) surface of the upper engagement frame 246 engages the proximal surface 212 of the panel body 210. The upper (i.e. proximal) surface of the lower engagement frame 248 engages the distal surface (not shown) of the panel body 210. In this example, the upper engagement frame 246 and the lower engagement frame 248 engage the peripheral edge 220 of the panel body 210. The upper engagement portion 246 and the lower engagement portion 248 retain the panel body 210. In some examples, a bridging portion extends between the upper engagement frame 246 and the lower engagement frame 248. The bridging portion may be recessed to house the panel body 210. In other examples, a gap is formed between the upper engagement frame 246 and the lower engagement frame 248. That is, no bridging portion extends between the upper engagement frame 246 and the lower engagement portion 248.

In use, the panel assembly 201 is mounted either by the user, or by using machinery. The attachment elements 250 are aligned with corresponding portions of an external surface of a vehicle (not shown). The panel assembly 201, including the panel body 210 and the fixation member 240, is affixed to the external surface by inserting the attachment elements 250 into the vehicle surface. The attachment elements 250 extend through the surface of the vehicle and is embedded therein, held in place by retention members 252. The retention members 252 may deform radially inwards when the attachment elements 250 are inserted into the vehicle surface. When the attachment elements 250 are fully inserted into the surface, the retention members 252 may deform radially outward to hold the attachment element 250 in place. When installed, the bottom (i.e. distal) surface of the lower engagement frame 248 engages the vehicle external surface. The lower engagement frame 248 provides a predetermined distance of separation between the panel body 210 and the vehicle external surface.

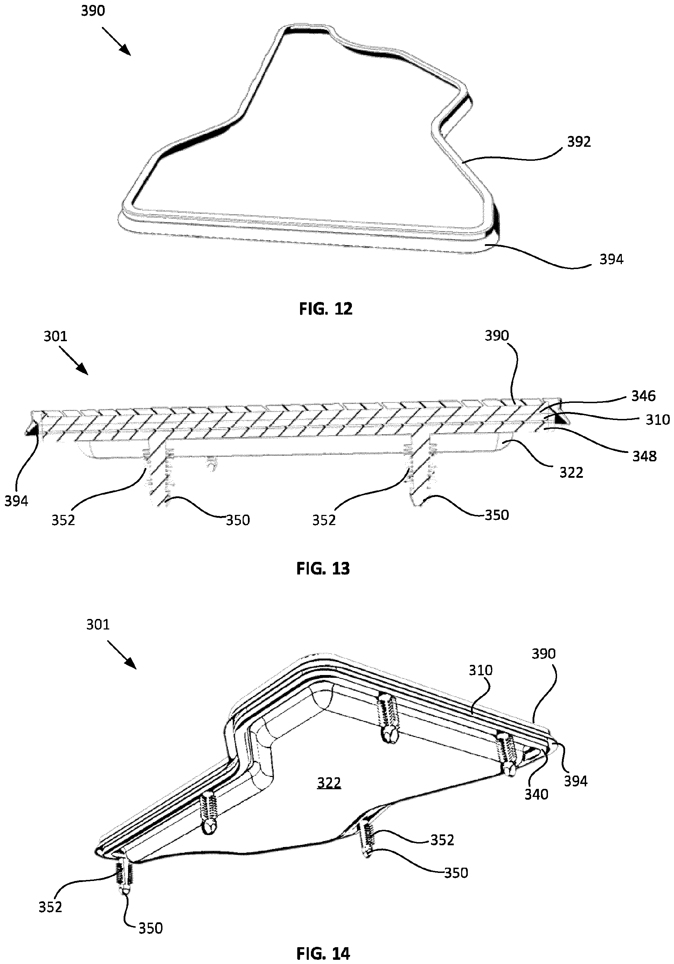

Figure 12 shows a frame member 390 that may additionally be provided to provide additional sealing characteristics. That is, the frame member 390 may be incorporated into a panel assembly. The frame member 390 has an edge portion 392 defining a wall. The frame member 390 also has a lip portion 394 protruding from the edge portion 392 and extending outwards. The frame member 390 in this example is made from a thermoplastic elastomer material.

Figures 13 to 15 illustrate a panel assembly 301 incorporating the frame member 390 of Figure 12. The panel assembly 301 is substantially the same as panel assembly 201. Panel assembly 301 is further provided with frame member 390. The frame member 390 is overmolded onto the upper engagement frame 346 of the panel assembly 301. The provision of the frame member 390 permits additional sealing, and increased noise absorption. As shown, the profile of the frame 390 corresponds with the upper engagement frame 346. The lip portion 394 may extend to cover the upper engagement frame 346. The lip portion 394 may extend to cover the upper engagement frame 346 and the panel body 310. The lip portion 394 may alternative extend to cover the upper engagement frame 346, the panel body 310, and the lower engagement frame 348.

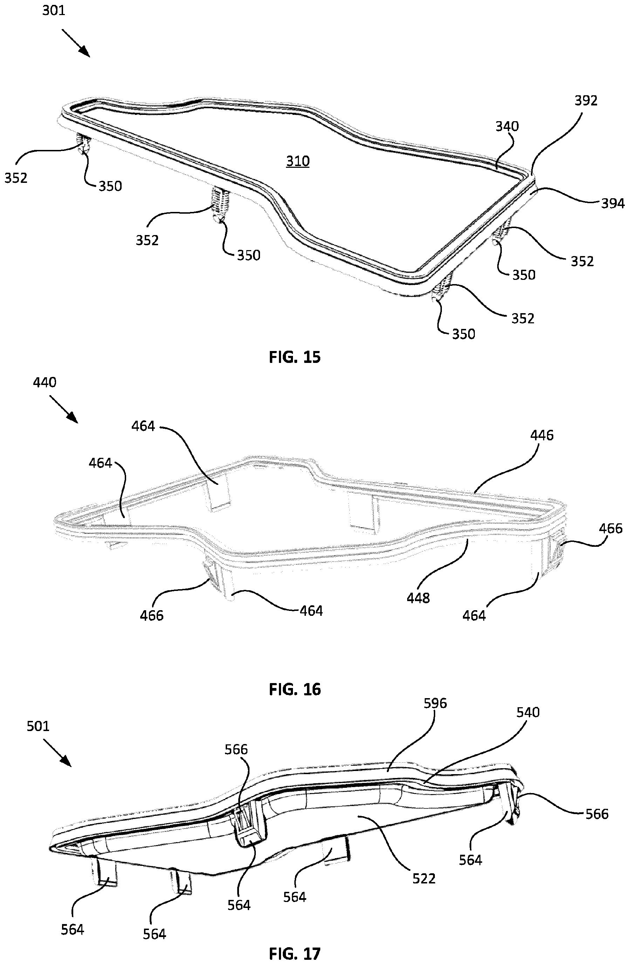

Figure 16 illustrates an alternative fixation member 440. The fixation member 440 is substantially the same as fixation member 240. However, attachment elements 250 are replaced with fastening elements 464. The fastening elements 464 have a clip portion 466 which are retractable into the fastening element 464. That is to say, the clip portion 466 protrudes from the surface of the fastening element 464 initially. When a force is exerted onto the clip portion 466 (for example, when the fastening element 464 is inserted into and in contact with the vehicle external surface), the clip portion 466 moves into the fastening element 464, such that the clip portion 466 is flush with the surface of the fastening element 464. In some examples, the clip portion 466 may move inward of the fastening element 464 to a position that is beyond the surface (i.e. sub-flush) of the fastening element 464. In use, a panel assembly incorporating the fixation member 440 is mounted to a vehicle external surface (not shown) by inserting fastening elements 464. When the fastening elements 464 are inserted, the vehicle surface exerts a force onto clip portions 466, pushing the clip portions 466 inwards. The clip portions 466 then engage with the vehicle external surface. In some examples, insertion of the fastening elements 464 produces an audible click, to signal that the panel assembly is mounted.

Figure 17 illustrates a panel assembly 501. Panel assembly 501 is substantially the same panel assembly 301, but incorporating fixation member 540. Fixation member 540 is substantially the same as fixation member 440 of Figure 16. Panel assembly 501 is additionally provided with a sealing cover 596, to further improve sealing, and to increase noise absorption. The sealing cover may extend to cover the frame member 590. The sealing cover 596 may extend to cover the frame member 590 and the upper engagement frame 546. The sealing cover 596 may extend to cover the frame member 590, the upper engagement frame 546 and the panel body 510. The sealing cover 596 may alternative extend to cover the frame member 590, the upper engagement frame 546, the panel body 510, and the lower engagement frame 548.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A sound absorption panel assembly for mounting on a vehicle external surface, comprising:
a substantially planar panel body having a proximal surface, and a distal surface opposite said proximal surface; and
a fixation member having a proximal end and a distal end, comprising a first engagement portion towards said proximal end adapted to cooperate with a second engagement portion towards said distal end so as to retainingly engage at least a portion of said panel body, said fixation member further comprising at least one attachment element protruding from said second engagement portion towards said distal end, wherein said second engagement portion is configured to provide a predetermined separation between said panel body and the vehicle external surface, during use.

2. A sound absorption panel assembly according to claim 1, wherein said fixation member further comprises a threaded portion towards said proximal end.

3. A sound absorption panel assembly according to claim 2, wherein said first engagement portion comprises a first thread, said first thread configured to engageably couple said threaded portion.

4. A sound absorption panel assembly according to claim 2 or claim 3, wherein said second engagement portion comprises a second thread, said second thread configured to engageably couple said threaded portion.

5. A sound absorption panel assembly according to any preceding claim, wherein said fixation member further comprises a coupling member configured to holdingly engage said first engagement portion and said second engagement portion.

6. A sound absorption panel assembly according to claim 5, wherein said coupling member is integrally formed with at least one of said first engagement portion and said second engagement portion.

7. A sound absorption panel assembly according to claim 5 or claim 6, wherein said coupling member is configured to engage the peripheral edge of said panel body, during use.

8. A sound absorption panel assembly according to any preceding claim, wherein said first engagement portion is adapted to cooperate with said second engagement portion so as to retainingly engage the peripheral edge of said panel body.

9. A sound absorption panel assembly according to claim 8, wherein said first engagement portion is continuous about said peripheral edge of said panel body.

10. A sound absorption panel assembly according to claim 8 or claim 9, wherein said second engagement portion is continuous about said peripheral edge of said panel body.

11. A sound absorption panel assembly according to any preceding claim, wherein said at least one attachment element comprises a clip portion configured to retainingly engage the vehicle external surface, during use.

12. A sound absorption panel according to any preceding claim, wherein said at least one attachment element is integrally formed with said second engagement portion.

13. A sound absorption panel according to any preceding claim, further comprising a frame member having an engagement portion arranged to sealingly abut said first engagement portion.

14. A sound absorption panel according to any preceding claim, wherein said first engagement portion and said second engagement portion form a C-shaped cross section, or a H-shaped cross section.

15. A fixation member for use in a sound absorption panel assembly according to any one of claims 1 to 14.
